# EUROPEAN PATENT SPECIFICATION

(11) **EP 0 596 008 B1**
(45) Date of publication and mention of the grant of the patent: **26.05.1999**
(21) Application number: 92916711.2
(22) Date of filing: 16.07.1992
(51) Int. Cl.: C08J 7/12

(54) **FLUORINATION OF ARTICLES MOLDED FROM ELASTOMERS**
FLUORIERUNG VON FORMKöRPERN AUS ELASTOMEREN
FLUORATION D'ARTICLES MOULES A PARTIR D'ELASTOMERES

(30) Priority: 19.07.1991 US 732631; 05.12.1991 US 802555
(43) Date of publication of application: 11.05.1994
(73) Proprietor: SHAMBAN, William S., Pacific Palisades, CA 90272 (US)
(72) Inventor: ZIELINSKI, Ronald, E., Fort Wayne, IN 46804 (US); SEABURY, Mark, J., Fort Wayne, IN 46835 (US)
(74) Representative: Dr. Weitzel & Partner
(86) International application number: PCT/US92/05973
(87) International publication number: WO 93/02129

(56) References cited:
- US-A- 3 992 221
- DATABASE WPIL Week 1689, Derwent Publications Ltd., London, GB; AN 89-119515 & JP,A,1 066 245 (KANTO DENKA KOGYO) 13 March 1989
- DATABASE WPIL Week 5185, Derwent Publications Ltd., London, GB; AN 85-319404 & JP,A,60 221 438 (HONDA MOTOR IND.KK) 6 November 1985
- DATABASE WPIL Week 4681, Derwent Publications Ltd., London, GB; AN 81-84501D & JP,A,56 126 146 (NIPPON OIL SEAL IND.) 2 October 1981
- DATABASE WPIL Week 1982, Derwent Publications Ltd., London, GB; AN 82-38334E & JP,A,57 056 237 (NIPPON OIL SEAL IND.) 3 April 1982
- DATABASE WPIL Week 0584, Derwent Publications Ltd., London, GB; AN 84-027450 & JP,A,58 219 045 (NIPPON OIL SEAL IND.) 20 December 1983

## Description

This invention relates generally to a method for the modification, through exposure to elemental fluorine gas, of articles molded from elastomers, in order to improve the performance characteristics of the modified elastomers.

An elastomer is a polymeric material which possesses an inherent property known as elasticity which allows the material to return to its original form when released from a deforming load. Elastomers are capable of a substantial degree of stretching under tension before breaking. Elastomers are commonly used in a wide range of applications. These applications include, but are not limited to: static and dynamic seals, couplings, rollers, bushings, bearings, diaphragms, gears, belts, hose and tubing, springs, and shock absorbers.

The performance of elastomers used in these and other applications is often limited because of the inherent friction characteristics of these materials. Several methods of improving these undesirable properties are currently in use in industry. The most common of these methods is to add to the elastomer formulation a material that is commonly referred to as an "internal lubricant". Many such materials are commercially available, including amide waxes, metallic stearates, molybdenum disulfide, various fluorocarbons, complex esters, fatty acids, polyethylenes, silicon oils, etc. When the elastomer is processed into a finished part, the internal lubricant diffuses to the surface of the article. During operation, a lubricative layer is formed between the elastomer and the mating surface, which lubricative layer lowers friction and, to some extent, increases the wear life of the elastomer. This effect, however, is often short-lived since the internal lubricant gradually wears away. Additionally, this technique introduces foreign material into the elastomer matrix and also has a tendency to induce non-uniform performance, since the lubricant's diffusion rate is controlled by temperature and pressure, both of which can vary considerably over the operational conditions.

Other techniques are also used to reduce friction in elastomeric materials. These include coating finished articles with PTFE, silicone grease or other external lubricants. Occasionally, a low friction coating may be used in tandem with an internal lubricant.

The common factor between all the techniques discussed above is that the benefits, that arise from each technique are short term only. The root of the problem, i.e., the inherent high friction in certain elastomeric articles is not addressed.

It is highly desirable, therefore, to generate low friction elastomeric materials which retain their low friction and high wear resistance characteristics for substantial periods of time.

The present invention discloses a procedure by which the chemical structure of the polymeric material itself is modified so that low friction material is generated on the outer portions of the finished article. Since the low friction material is part of the elastomer matrix, it is not prone to the problems of diffusion or rapid wear typically associated with an internal or external lubricant. As a result, and due to the exceedingly low friction coefficients obtained in certain materials, it is possible to considerably extend wear life in these materials, especially when used in dynamic applications. In addition, certain elastomers modified according to the method of the present invention exhibit improved barrier properties, including an increased resistance to swell that may otherwise be caused by fluid permeability.

This invention, therefore, comprises a method of reducing the static and dynamic friction coefficients and increasing the wear life and abrasion resistance of articles molded from elastomers in general, and improving the barrier properties of articles molded from thermoplastic elastomers. Fabricated elastomeric articles are contacted with gaseous fluorine under controlled conditions, and in the process of a hydrogen fluoride scavenger. This process modifies the chemical structure of the elastomer so that a fluorinated material is generated on the external portion of the elastomeric article, which fluorinated material extends inwardly into the elastomer matrix.

The low friction characteristics of certain commercially available perfluorinated thermoplastics such as PTFE have been well known. Similarly, the fluorinated materials generated by the methods of this invention endow the polymer modified articles with low wear and low friction characteristics. Since the fluorinated material comprises part of the elastomeric matrix, it will not diffuse, leach or otherwise be lost from the material except through normal abrasive wear.

The beneficial characteristics of the invention may be observed by way of the drawings wherein:
Fig. 1 shows a stress/strain plot of a representative elastomer before exposure to fluorine;
Fig. 2 shows a stress/strain plot of the elastomer shown in Fig. 1 after exposure to fluorine;
Fig. 3 shows the FTIR spectrum of a representative elastomer before exposure to fluorine;
Fig. 4 shows the FTIR spectrum of the elastomer shown in Fig. 5 after exposure to fluorine;
Fig. 5 shows a graph comparing dry seal torque of a lip seal before and after exposure to fluorine according to the inventive method.

For an article to be amenable to fluorine modification according to the method of the present invention, it must be composed, either wholly or partially, of a suitable elastomeric polymer. Such a polymer should preferably possess a backbone chain which is primarily hydrocarbon in nature, i.e. essentially composed of carbon atoms to which are attached a high proportion of hydrogen atoms.

When the article is contacted with fluorine gas, a chemical reaction takes place in which the hydrogen atoms attached to the polymer chain are substituted by fluorine atoms, i.e, the polymer becomes "fluorinated". Hydrogen fluoride (HF) is generated as a by-product of this reaction. The reaction is represented (in non-stoichiometric form) by the following example:

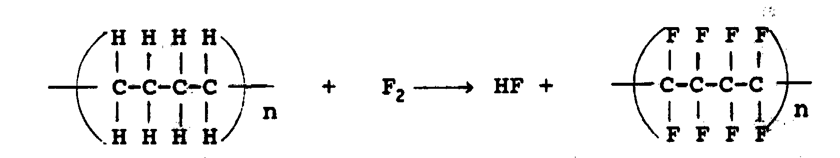

If all of the replaceable hydrogen atoms are substituted with fluorine atoms, the material is said to have been "perfluorinated". Perfluorination of the article's surface in this manner produces optimum levels of friction reduction in the article.

The "fluorination reaction" is very rapid and exothermic, and takes place only where the elastomer comes in physical contact with gaseous fluorine, i.e. the reaction is essentially diffusion controlled. Articles exposed to fluorine are consequently fluorinated from the outside inwardly. Initial fluorination occurs only at those surfaces immediately exposed. Subsequent reaction takes place below the surface. The depth of penetration by fluorine into the article, and hence the depth of the fluorinated layer, will vary with the particular polymeric material to be fluorinated, and is governed by temperature, pressure, fluorine concentration and duration of reaction.

Elastomers suitable for fluorine modification according to the present invention need not necessarily be completely hydrocarbon in nature. The polymer backbone should however, contain enough hydrocarbon character (i.e., sufficient replaceable aliphatic carbon-hydrogen bonds) that the fluorinated matrix generated upon contacting the system with fluorine will possess the desired level of friction reduction. Backbone chains which contain other groups or atoms in addition to carbon, or possess pendant groups attached to the backbone, may also be suitable for fluorine modification in certain situations. However, these atoms or groups should not interfere with the process or react unfavorably with fluorine so as to promote degradation or fragmentation of the polymer backbone. The suitability of a given elastomer to direct fluorination via the processes disclosed in this invention, and the reduction in friction coefficients attainable, may be established through routine experimentation by those skilled in the art.

The method according of this invention involves direct fluorination of the polymeric material using fluorine gas. A fabricated article, or a plurality of fabricated articles, is placed into a suitable reactor vessel and exposed to fluorine gas. This process liberates HF as the article is fluorinated. HF is an undesirable by-product since it may interfere with the fluorination process and/or degrade the bulk material. It is removed from the process by adding a suitable "scavenger", such as sodium fluoride (NaF), to the reactor vessel. The scavenger reacts with HF to produce sodium bifluoride (NaF + HF → NaHF₂) which is relatively benign to the process.

In a preferred mode, the reactor vessel is purged with an inert gas, such as nitrogen or helium, prior to commencing the fluorination reaction. This will minimize the generation of acid fluoride groups, and their carboxylic acid hydrolysis products, in the modified article by excluding oxygen from the reaction medium. For the same reasons, traces of moisture are also removed from the reaction medium. The presence of carboxylic acid groups can adversely effect the friction and wettability characteristics of the fluorinated article.

The fluorine gas used in this procedure will preferably be diluted with the inert gas before it enters the reactor vessel. The fluorine content of this "process gas" may range from trace amounts, such as 0.5%, up to 100%, depending upon the elastomer considered and its ultimate application. Since the process is very exothermic, the fluorine content of the gaseous mixture must be carefully controlled. Excessive exposure to fluorine, particularly at the start of a reaction, can result in the combustion of the article being fluorinated. For most applications, a process gas mixture containing from about 2 to about 95% fluorine by volume is preferred, with a process gas containing from about 5 to about 75% fluorine by volume most preferred.

The reaction of fluorine with any given elastomer will usually result in a certain degree of chain scission in addition to the desired fluorination reaction. Scission is the rupture of backbone or crosslinking bonds in the elastomer matrix. This process is detrimental to the desired reaction as it usually involves fragmentation of the polymer backbone. Excessive backbone fragmentation ultimately results in degradation of the tensile properties of the elastomer, which may adversely effect the performance of the fluorinated article.

For a given elastomer, scission will tend to increase with exposure time at a given fluorine concentration, or with increasing fluorine concentration. Consequently, when an elastomer is modified by the methods of this invention, the fluorination conditions must be optimized so that a maximum reduction in friction coefficient may be obtained with a minimum of polymer degradation. This is particularly significant when modifying an elastomeric component which is to conform to the physical requirements of a particular specification.

The method of the present invention does not provide for the perfluorination of the entire body of the article. Perfluorination would effectively create a new material which may have very different physical properties than the original article. The purpose of the present invention is to create articles having low coefficients of friction through modification of the surface and generally immediate subsurface of the articles, while maintaining the remaining original physical properties of the articles. Since the original tensile properties are not appreciably altered, the invention permits the direct replacement of articles (including those requiring qualification of the elastomer to a particular specification) used in existing applications with polymer-modified articles of the same material and configuration, yet having improved wear life and reduced static and dynamic coefficients of friction. In the case of thermoplastic elastomers, the barrier properties of the article are also improved.

The fluorination of articles by the method of the present invention negates the need to create elastomeric articles specially formulated to achieve the improved performance characteristics noted above. Elastomers are often formulated - that is, compounded with various types of fillers and other processing materials - so that a range of potential physical properties may be accommodated by that elastomer as required. The process for the friction reduction of elastomeric articles described by the present invention is generally polymer-dependent and not formulation-dependent. For example, it has been established that NBR-based thermoset elastomers can have their friction coefficients dramatically reduced by the method of the present invention. This is true regardless of the formulation, the ACN content of the elastomer, or its manufacturer. Similarly, copolyester thermoplastic elastomers can have their friction coefficients significantly reduced by the methods of this invention. This is also true, regardless of the formulation, the hard block/soft block ratio of the elastomer, or its manufacturer. Copolyester thermoplastic elastomers modified according to the present invention also exhibit significant improvement in their resistance to fluid permeability when compared to their non-modified counterparts.

A variety of fluorine reaction vessel designs are suitable for carrying out the invention, which vessel designs are well known to those skilled in the art. Preferred examples include magnetically- or mechanically-stirred bomb type vessels and rotating drum reactors. Suitable materials for reactor vessel construction include monel, inconel, hastelloy, brass, stainless steel or any other metal not subject to corrosion by fluorine under the operating conditions employed in the inventive process.

The fluorination reaction must be performed under carefully controlled conditions so that fluorination of the article is achieved without significant loss of its tensile properties. Specifically, the temperature, pressure, fluorine concentration and duration of reaction must all be carefully monitored. Preferably, flow rates of fluorine and nitrogen gases used in the process are controlled and measured by mass flow controllers. Use of these devices allows one to accurately manipulate the fluorine concentration in the process gas mixture, and control its rate of delivery to the reactor vessel. Technical grade (97% or better) fluorine and Ultra Pure Carrier grade (or better) nitrogen having a dew point not greater than -73°C (= -100°F) are the preferred reagents for this process. However, other grades of fluorine or nitrogen may also be used. For example, fluorine pre-diluted with nitrogen may be used in place of technical grade fluorine. Of course the use of fluorine gas mixtures in this way limits the maximum fluorine concentration in the reactor, and such mixtures may not be desirable in circumstances where high fluorine levels are desired.

The article/articles to be fluorinated are placed in the reactor vessel with, a hydrogen fluoride scavenger. Finely divided sodium fluoride is the preferred scavenger, although other scavengers such as potassium fluoride may also be used with favorable results. The quantity of sodium fluoride used should be sufficient to react with all the HF formed in the reaction. As an approximate guideline, one gram of sodium fluoride may be added for every gram weight of material to be fluorinated. However, the stoichiometric quantity of sodium fluoride required will likely be significantly less than this. The articles are in close physical contact with the scavenger during the fluorination process in order to optimize the scavenging process. This may be done, for example, by stirring the articles in a bed of powdered sodium fluoride. For larger articles it may be necessary to tumble the articles with the scavenger in a rotating drum-type vessel.

Once the reactor vessel is loaded, it is continuously purged with an inert gas for a sufficient time so that oxygen and water vapor are flushed from the chamber. Fluorine is then added to the nitrogen flow so that a mixture of fluorine in nitrogen passes directly into the reactor vessel, where it contacts the articles to be fluorinated.

Typical fluorination reaction parameters (i.e., fluorine and nitrogen flow rates, duration of reaction, etc.) will vary somewhat between samples, dependent upon factors such as the desired reduction in friction coefficient, type of material, size of reactor vessel, and surface area and weight of articles to be fluorinated. Articles of virtually any size and configuration may be fluorinated by the methods disclosed in this invention, limited only by the capacity of the reactor vessel. Additionally, the only limitation to the number of articles which may be fluorinated in one batch is the capacity of the reactor vessel.

Thermoset elastomers are typically formulated with fillers, plasticizers, curing agents and other additives well known to those skilled in the art of rubber chemistry, so that the resulting compound has physical characteristics required for service in a specific application. Generally, base polymers and fillers typically account for 75-90% by weight of most thermoset elastomeric formulations. The preferred fillers are carbon black, graphites and powders, which are quite benign to the fluorination process. Many other fillers commonly used in the art of rubber chemistry, such as silicone, calcium carbonate, glass powder, talcs and clays, may also be utilized in certain applications. These latter fillers, however, are susceptible to attack by fluorine in varying degrees, and therefore are not as widely used as the preferred fillers listed above.

Thermoplastic elastomers (TPEs) may also be formulated with fillers and other additives known to those skilled in the art of thermoplastic processing. Generally, base polymer and fillers typically account for at least 95% by weight of most thermoplastic elastomeric formulations. The preferred fillers commonly utilized with thermoplastic elastomers are carbon blacks, graphite, carbon powders and fibers, PTFEs and other fluorocarbons, and molybdenum disulfide. These fillers are quite benign to the fluorination process. Silicones, calcium carbonate, glass powder, and talcs and clays, may also be used as fillers for TPEs in specific applications, although these latter fillers may also be susceptible in varying degrees to attack by fluorine.

Examples of several commercially available base thermoset elastomers which have been found to exhibit improved friction characteristics when compounded into an elastomeric article and fluorinated according to the present invention are listed below. This list is presented to illustrate specific examples of elastomers that are amenable to the present invention, and is not intended to be a complete listing of suitable elastomers. The polymers are referred to by their chemical names. Suitable thermoset elastomers thus include: polybutadienes, isobutylene-isoprene elastomers, chlorinated polyethylenes, chlorosulfonated polyethylenes, polyepichlorohydrins, ethylene/acrylic elastomers, ethylene-propylene copolymers, ethylenepropylene-diene terpolymers, tetrafluoroethylene-propylene copolymers, vinylidene fluoride-hexafluoropropylene copolymers, butadiene-acrylonitrile copolymers, polychloroprenes, styrene-butadiene copolymers, polyisoprenes, carboxy-modified butadiene-acrylonitrile elastomers and acrylonitrile-ethylene-butadiene terpolymers.

Examples of commercially available thermoset elastomers which have been found to exhibit impaired friction characteristics after exposure to fluorine include polyurethanes, fluorosilicones, and polyphosphazenes. The phrase "impaired friction characteristics" means that the static and dynamic coefficients of friction of these materials increased after exposure to fluorine.

TPEs are often categorized according to morphology and chemical composition into six general classes, which TPEs may be utilized in the inventive process. The classes comprise 1) copolyester TPEs; TPEs composed of a random hard block/soft block segmented structure, and produced by the condensation of a dialkylterphthalate with tetramethylene and polytetramethylene glycols. 2) olefinic TPEs/thermoplastic polyolefins (TPOs); blends or mechanical mixtures of a semicrystalline plastic and an amorphous rubber. 3) styrenic TPEs; block copolymers characterized by the presence of hard and soft phases within the individual polymer molecules. 4) elastomeric alloy TPEs; these TPEs are further subdivided into (a) thermoplastic vulcanizates (TPVs) (elastomeric alloys composed of an intimate rubber/plastic mixture in which the rubber phase is highly crosslinked) and, (b) melt-processible rubbers (MPRs) (elastomeric alloys which behave as single-phase systems). 5) polyurethane TPEs (TPUs); composed of a segmented hard block/soft block structure and generally prepared by the condensation of a diisocyanate with a short chain diol and a polyester or polyether polyol. 6) polyamide TPEs (Nylons); composed of a segmented hard block/soft block structure in which the segments are joined by amide linkages. These classifications are well known to those skilled in the art of rubber chemistry, and are further described, for example, in "Modern Plastics Encyclopedia", 1990 Issue, Volume 67, Number 11, McGraw-Hill.

New TPEs not within the six generic classes described above may theoretically be created by blending together compatible elastomers taken from different generic TPE classes. For example, certain copolyester TPEs may be blended with certain polyurethane TPEs to form a new TPE material. Those skilled in the art will recognize that this and other TPE blends would be amenable to polymer modification by the methods of the present invention, and the modification of such materials is within the scope of the present invention.

Articles produced by the method of the present invention are particularly useful in applications where the performance of an article has been limited by its high friction and wear characteristics, and where the article has exhibited an undesirable amount of swell. For example, articles produced by the method of the present invention are particularly useful for improving the performance of static and dynamic elastomeric seals. Those skilled in the art will additionally recognize that there are numerous other potential applications of this invention. If these other beneficial applications follow the teachings of the present invention, such applications are within the scope of this invention.

### Reaction Parameters

All reaction parameters presented in the following Examples and Tables were established through routine experimentation using a magnetically-stirred brass bomb-type reactor vessel having an internal volume of 0.75 liters. The vessel was charged with approximately 30.0 grams of anhydrous sodium hydroxide powder. These parameters may be adjusted through routine experimentation to allow the use of alternative reactor designs and increased capacities.

The reactor vessel is purged for 1-60 minutes with nitrogen at a flow rate of 100-200 SCCM. The articles are then fluorinated with the gaseous mixture at a fluorine flow rate of 5-50 SCCM, with a nitrogen flow rate of 15-50 SCCM. The fluorination reaction typically proceeds from 60-240 minutes in the case of thermoset elastomers, and from 60-4800 minutes in the case of thermoplastic elastomers. The fluorine pressure may be varied from about 0,01 to about 0,035 kg/mm² (15 to about 50 PSIA). The reactor is then purged again with nitrogen following the fluorination for an additional period of 30-60 minutes.

These parameters were used for numerous articles composed of a variety of different elastomer formulations. Batch sizes ranged between 1 -500 pieces and weighed between 0.1 - 100 grams. For a given article, the same reaction parameters would typically be used regardless of batch size. The specific parameters were established through experimentation using the following criteria:
1) Significant reduction in articles' static and dynamic friction coefficients.
2) Minimal depreciation in articles' original physical properties.
3) Significant improvement in (thermoplastic) articles' permeability resistance.
4) Minimal duration of reaction.

Those skilled in the art will recognize that the process is sufficiently flexible that, for any given elastomeric article, the parameters may be adjusted to accommodate any desired level of fluorination and friction reduction. Although such elastomers may have certain characteristics that are inferior to the optimal properties that are achievable by this invention, they may be useful for specific applications.

The processes described in this invention were typically performed at room temperature. In specific applications, the fluorination reaction can be performed at temperatures ranging from about -100°C to about 200°C.

Fluorinated articles generated according to the methods of this invention were analyzed by several techniques. Test results are presented in the Tables that follow. These techniques are summarized as follows:

### 1) Friction Coefficient Testing

Static and dynamic coefficients of friction were measured according to ASTM D 1894 using a Testing Machines, Inc. Monitor/Slip and Friction test fixture, which conforms to the ASTM specification. This text fixture determines friction coefficients by pulling a metal sled (to which the sample is mounted) of fixed weight (200 grams) across a polished glass plane. In all cases, samples were pulled a distance of no less than 76,2 mm (3") at a constant speed of 127 mm/min (= 5"/min).

### 2) Taber Abrasion

Taber Abrasion data was determined on a Teledyne Taber Model 5150 Abraser, which conforms to ASTM D 3389. In all cases, test samples were discs of material, approximately 4 1/2" in diameter, cut from either a standard 152,4 x 152,4 mm (6" x 6") or 152,4 x 228,6 mm (6" x 9") tensile sheet.

Test samples were evaluated by one of the two following techniques.

### a) "Weight Loss" Method

The test sample was subjected to 1000 cycles of abrasive wear using H-18 wheels at a loading of 1000 g. The weight loss resulting from this procedure was recorded.

### b) "Wear Factor" Method

A modification to ASTM D3389, developed by Akron Rubber Development Laboratory, Inc. (Akron, Ohio) was used to determine the number of abrasive cycles required to wear through the outer "skin" (formed on some elastomers as a consequence of the molding process) of fluorinated and non-fluorinated samples. The greater the number of abrasion cycles required, the greater the abrasion resistance of the material. For a given elastomer, "wear factor" is defined as follows:$\text{Wear Factor =} \frac{\text{cycles to wear-through for non-fluorinated elastomer}}{\text{cycles to wear-through for fluorinated elastomer}}$

A wear factor of less than one indicates that fluorination of the sample has increased its abrasion resistance.

### 3) Tensile Testing

The mechanical behavior of an elastomer - that is, its deformation and flow characteristics under stress, can be characterized by its stress/strain properties. Important quantities which define the mechanical behavior of an elastomer are as follows:
a) 100% Modulus
b) Tensile Strength
c) 100% Elongation

These properties are collectively referred to as the "tensile properties" of an elastomer.

The modulus, tensile strength and elongation of all samples were determined according to ASTM D412 or ASTM D1708 using an Instron Model 4204 Tensile Tester. Additionally, stress/strain curves were plotted to determine any significant differences in the mechanical behavior of fluorinated and non-fluorinated materials. Samples were cut from standard sized tensile sheets using either an ASTM Die "C" or an ASTM "Microtensile' dogbone die.

### 4) Infrared Analysis

Infrared analysis of samples was performed according to ASTM D 2702 using a Nicolet Model 5 PC Fourier Transform Infrared (FTIR) Spectrometer. FTIR spectra were obtained by using the Attenuated Total Reflectance (ATR) technique which is described in, for example, Mirabella, F.M. and Harrick, N.J. "Internal Reflection Spectroscopy: Review and Supplement" (1985). This is a surface-analytical technique well suited to the IR analysis of opaque materials.Of particular interest are the absorption frequencies of carbon-hydrogen and carbon-fluorine bonds.

Carbon-hydrogen bonds strongly absorb IR radiation at relatively short wavelengths, typically around 3000 cm⁻¹, whereas carbon-fluorine bonds have a characteristic absorption at a much longer wavelength, typically around 1100 cm⁻¹.

The fluorination of a sample is indicated by the appearance of characteristic absorptions in the 1100 cm⁻¹ region of its ATR spectrum. If these absorptions appear with a concomitant loss of peaks characteristic of carbon-hydrogen bonds, the replacement of hydrogen by fluorine is indicated.

### 5) Miscellaneous Wear and Prototype Testing

A variety of wear and prototype testing has been performed to measure the increase in life expectancy of articles fluorinated by the inventive method. The general purpose of this testing was to demonstrate the performance advantages of the articles in dynamic applications.

### 6) Fluid Permeability Resistance

The ability of certain thermoplastic elastomers (TPEs) to withstand swelling when immersed in certain test fluids was determined according to ASTM D471.

### Experimental Procedures:

### 1. Sample Preparation

A number of commercially available elastomers were tested utilizing the procedures of the present invention. Initial physical testing of the samples was performed with the objective of establishing the original physical properties of those samples. This testing was performed in accordance with the appropriate ASTM specification. All articles required for these tests were therefore prepared as required by each ASTM specification.

The test materials were usually obtained directly from the manufacturer in the form of injection-moled "plaques" having dimensions from 76,2 x 114,3 mm (3" x 4 1/2") to 152,4 x 228,6 mm (6" x 9"). Alternatively, test materials were molded by the inventors from commercially available resins using a Negri-Bossi NB90 injection press. Test articles for friction coefficient, Taber Abrasion, and tensile analysis were prepared by cutting the required configuration from the injection molded plaques by using a metal die. Sample configurations used were as follows:
Coefficient of Friction (ASTM D1894) - 63,5 x 63,5 mm (2 1/2" x 2 1/2")
Taber Abrasion (ASTM D3389) - Disc, approximately 114,3 mm (4 1/2") diameter
Tensile Testing (ASTM) D412) - "Microtensile" or Die "C" dumbbell

The "thickness" dimension of each article was typically 1,78 - 3,3 mm (0.07" - 0.13") and depended on the thickness of the tensile sheet from which it was prepared.

### 2. Elastomers Use as Starting Materials

Commercially available base polymers were generally used in the tests. In the case of the thermoset elastomers, each base polymer was blended or "compounded" with carbon black, plasticizer, curing agents and other additives using standard mixing procedures known to those skilled in the art of rubber chemistry. The polymers were compounded according to a specific formulation, so that the resulting elastomers would have physical characteristics required for service in specific applications. Since the base polymer and carbon black usually account for up to 90% by weight of the total formulation, the remaining additives generally have little influence on the effectiveness of the fluorination process. In other words, the process effectively depends on the class or type of base polymer an article contains and not the specific formulation.

For the purposes of the present invention, the thermoset elastomeric articles are referred to by the base polymer or polymers from which they are fabricated. Several acceptable commercial sources of each polymer may be available. Physical testing has been performed on articles formulated from 12 different base polymers. For purposes of providing an effective comparison, this testing was carried out both prior to and after exposing said articles to fluorine.

Testing was performed on the following elastomers:
1. EP; An elastomeric formulation containing 40.0% by weight of ethylene-propylene copolymer (40% ethylene content) having a hardness of 80 ± 5 Shore A when cured.
2. NBR; An elastomeric formulation containing 40.0% by weight of a blend of acrylonitrile-butadiene copolymers (mean acrylonitrile content 29%), having a hardness of 70 ± 5 Shore A when cured.
3. NBR-IL; An elastomeric formulation containing 50.0% by weight of acrylonitrile-butadiene copolymer (acrylonitrile content 21%) and less than 1% by weight of an internal lubricant, having a hardness of 75 ± 5 Shore A when cured.
4. XNBR; An elastomeric formulation containing 50.0% by weight of a blend of carboxy-modified acrylonitrile-butadiene copolymers (mean acrylonitrile content 22%) having a hardness of 80 ± 5 Shore A when cured.
5. HSNBR; An elastomeric formulation containing 65.0% by weight of a hydrogenated acrylonitrile-butadiene copolymer (98% hydrogenated; mean acrylonitrile content 38%) having 65 ± 5 Shore A hardness when cured.
6. FKM-1; An elastomeric formulation containing 70.0% by weight of a vinylidene fluoride-hexafluoropropylene copolymer having 75 ± 5 Shore A hardness when cured.
7. FKM-2; An elastomeric formulation containing 70.0% by weight of a vinylidene fluoride-hexafluoropropylene copolymer having 80 ± 5 Shore A hardness when cured.
8. TFEP; An elastomeric formulation containing 76.3% by weight of a tetrafluoroethylene-propylene copolymer having 70 ± 5 Shore A hardness when cured.
9. IIR; An elastomeric formulation containing 51.2% by weight of an isopropylene-isobutylene copolymer having 70 ± 5 Shore A hardness when cured.
10. ACM; An elastomeric formulation containing 48.8% by weight of an ethylene-methyl acrylate copolymer having 70 ± 5 Shore A hardness when cured.
11. CR; An elastomeric formulation containing 38.5% by weight of poly(chlorobutadiene) having a hardness of 80 ± 5 Shore A when cured.
12. CSM; An elastomeric formulation containing 48.3% by weight of chlorosulfonated polyethylene base polymer having a cured hardness of 70 ± 5 Shore A.

Original physical properties of the thermoset starting materials are listed in Table 1. All data has been determined according to standard ASTM procedures as discussed above.

**Table 1.**

| Physical Characteristics of Non-Fluorinated Thermoset Starting Materials | | | | | | |
|---|---|---|---|---|---|---|
| Elastomer | Tensile Strength kp/mm² (PSI) | Elongation (%) | 100% Modulus kp/mm² (PSI) | Hardness¹ (Shore A) | Friction Coefficient | |
| | | | | | Static | Dynamic |
| EP | 1,19 (1700) | 170 | 0,57 (810) | 80 | 1.36±.12 | 1.24±.11 |
| NBR | 1,51 (2160) | 375 | 0,38 (540) | 70 | 1.74±.24 | 1.31±.11 |
| NBR-IL | 1,16 (1650) | 135 | 0,66 (950) | 75 | 0.83±.09 | 0.71±.08 |
| XNBR | 1,63 (2330) | 165 | 0,80 (1140) | 80 | 0.97±.10 | 0.76±.14 |
| HSNBR | 2,24 (3200) | 430 | 0,20 (290) | 65 | 1.97±.15 | 1.50±.16 |
| FKM-1 | 1,54 (2200) | 160 | 0,98 (1400) | 75 | 1.49±.17 | 0.83±.04 |
| FKM-2 | 1,89 (2700) | 235 | 0,71 (1010) | 80 | 0.90±.04 | 0.74±.02 |
| TFEP | 1,4 (2000) | 310 | 0,35 (500) | 70 | 1.47±.05 | 1.25±.04 |
| IIR | 1,42 (2030) | 330 | 0,27 (385) | 70 | 1.82±.30 | 1.24±.17 |
| ACM | 1,31 (1875) | 340 | 0,43 (610) | 70 | 3.05±.19 | 1.83±.12 |
| CR | 1,55 (2220) | 160 | 0,92 (1320) | 80 | 2.0±.20 | 1.41±.09 |
| CSM | 1,82(2600) | 320 | 0,62 (890) | 70 | 1.42±.08 | 1.22±.06 |

| | | | | | | |
|---|---|---|---|---|---|---|
| ¹ Determined according to ASTM D 1415. | | | | | | |

With regard to the thermoplastic elastomers, commercially available TPEs were also used as starting materials. The elastomers were generally supplied by the manufacturer as injection molded "plaques", or slabs, of material. Test samples were cut directly from the molded slabs. Occasionally, the TPE was supplied as a powder or pellet, in which case tensile slabs of the material were prepared by injection molding using the manufacturer's recommended molding procedure.

For the purposes of the present invention, the particular thermoplastic elastomers used as starting materials have been identified by the generic classification, tradename used by the supplier and the grade. Acceptable alternate sources of each TPE are generally available under different tradenames from alternate suppliers. Physical testing has been performed on samples taken from each of the generic classifications of the TPEs listed below. This testing was carried out both prior to and after exposing said articles to fluorine.
1. Styrenic (S-EB-S); Kraton®, Grades G7722, G7720; Shell Chemical Company, Houston, TX.
2. TPO; TPR®, Grade 9101-75W900; Advanced Elastomer Systems*, St. Louis, MO.
3. TPV (EPDM/Polypropylene); Santoprene®, Grade 101-73; Advanced Elastomer Systems*, St. Louis, MO.
4. TPV (NBR/Polypropylene); Geolast®; Grade 701-70 Advanced Elastomer Systems∗, St. Louis, MO.
5. MPR; Alcryn®; Grade 2070 BK; E.I. DuPont Company, Wilmington, DE.
6. Copolyester; Hytrel®; Grades 4056, 5556 6359, 7246, 8238; E.I. DuPont Company, Wilmington, DE.
7. Polyurethane; Pellethane®; Grade 2102-90A; Dow Chemical Company, Midland, MI.
8. Polyamide (Nylon 11 blend); Zytel®; Grade FN714; E.I. DuPont Company, Wilmington, DE.
9. Polyamide (Nylon 12); Grilamid®; Grade L20GT; EMS-American Grilon, Inc., Sumter, SC.
10.Polyamide (Nylon 4/6); Stanyl®; Grade TW300; DSM Engineering Plastics, Reading, PA.

The original physical properties of the starting materials are presented in Table 2. All data was determined according to the ASTM procedures discussed above.

**Table 2.**

| Physical Characteristics of Non-Fluorinated Thermoplastic Starting Materials | | | | | | |
|---|---|---|---|---|---|---|
| Elastomer | Tensile Strength kp/mm² (psi) | Elongation (%) | 100% Modulus kp/mm² (psi) | Hardness (Shore) | Friction Coefficient | |
| | | | | | Static | Dynamic |
| Kraton® G7722 | 0,74 (1060) | 520 | 0,22 (310) | 66 A | 3.10 ± .27 | 2.57 ± .05 |
| Kraton® G7720 | 0,37 (520) | 580 | 0,16 (220) | 64 A | 3.89 ± .46 | 2.53 ± .05 |
| TPR®9101-75W900 | 1,00 (755) | 425 | 0,39 (550) | 79 A | 1.92 ± .46 | 1.63 ± .15 |
| Santoprene® 101-73 | 0,69 (980) | 395 | 0,34 (485) | 75 A | 2.13 ± .08 | 1.94 ± .08 |
| Geolast® 701-70 | 0,58 (820) | 250 | 0,34 (485) | 76 A | 1.02 ± .05 | 0.91 ± .05 |
| Alcryn® 2070 BK | 0,77 (1100) | 150 | 0,52 (740) | 73 A | 1.97 ± .11 | 1.70 ± .08 |
| Hytrel® 4056 | 2,80 (4000) | 795 | 6,26 (8 940) | 43 D | 0.30 ± .04 | 0.24 ± .03 |
| Hytrel® 5556 | 3,58 (5650) | 660 | 18,62 (28 800) | 54 D | 0.25 ± .03 | 0.16 ± .02 |
| Hytrel® 6359 | 4,04 (5780) | 560 | 29,33 (41 900) | 60 D | 0.21 ± .02 | 0.15 ± .01 |
| Hytrel® 7246 | 4,32 (5170) | 490 | 48,36 (69 800) | 69 D | 0.19 ± .02 | 0.12 ± .01 |
| Hytrel® 8238 | 3,84 (5480) | 150 | 66,99 (95 700) | 75 D | 0.12 ± .02 | 0.09 ± .02 |
| Pellethane® 2102-90A | 5,30 (7580) | 620 | 5,95 (8 500) | 93 A | 0.41 ± .04 | 0.29 ± .02 |
| Zytel® FN714 | 2,70 (3850) | 150 | 29,40 (42 000) | 56 D | 0.43 ± .04 | 0.38 ± .04 |
| Grilamid® L20GT | 4,27 (6100) | 20 | 126,000 (180 000) | 66 D | 0.12 ± .02 | 0.07 ± .01 |
| Starryl® TW300 | 6,58 (9400) | 280 | 101,50 (280) | 79 D | 0.15 ± .02 | 0.10 ± .02 |
| ¹ Determined according to ASTM 01415. ² Tensile, Elongation, and Modulus provided by supplier. | | | | | | |

### 3. Fluorination procedures

The general procedure for the direct flourination of articles including the agitation of the samples during flourination has previously been described. A fluorine flow rate of 25-30 SCCM was utilized for the thermoset elastomers, with a nitrogen flow rate of 25-35 SCCM. The exposure time to the fluorine gas mixture was 60 minutes for the EP, ACM, CR and CSM samples; 90 minutes for the NBR, NBR-IL, XNBR, HSNBR and IIR samples; 120 minutes for the TEEP sample; and 240 minutes for the FKM-1 and FKM-2 samples.

With regard to the thermoplastic elastomers, the fluorine flow rate was 20-30 SCCM, and the nitrogen flow rate was 30-50 SCCM. The exposure time to the fluorine gas mixture was 60-80 minutes for the Kratan, TPR, Santoprene, Geolast and Alcryn samples; 120 minutes for the Zytel, Grilamid, Stanyl and Pellathane samples; and 240 minutes for the Hytrel samples.

These parameters may be routinely adjusted to accommodate the fluorination of suitable alternative elastomer formulations. Typical batch sizes for the preparation of test articles ranged from 1-20 pieces and weighed between 1-80 grams (total batch weight). In all cases, the reactor vessel was purged with nitrogen before and after the fluorination process.

### 4. Experimental Results

(The process according to the invention is shown in Section E)

### A. Coefficients of Friction

Static and dynamic coefficients of friction for all test articles were determined according to ASTM D 1894. Results of these tests are presented in Tables 3 and 4.

**Table 3.**

| Static and Dynamic Friction Coefficients of Fluorinated Thermoset Elastomers | | |
|---|---|---|
| ELASTOMER | STATIC FRICTION COEFFICIENT | DYNAMIC FRICTION COEFFICIENT |
| EP | 0.22±.02 | 0.18±.02 |
| NBR | 0.16±.02 | 0.13±.01 |
| NBR-IL | 0.29±.01 | 0.23±.01 |
| XNBR | 0.23±.04 | 0.20±.01 |
| HSNBR | 0.18±.01 | 0.14±.01 |
| FKM-1 | 0.84±.04 | 0.68±.04 |
| FKM-2 | 0.41±.04 | 0.27±.03 |
| TFEP | 0.15±.02 | 0.12±.01 |
| IIR | 0.37±.03 | 0.30±.03 |
| ACM | 0.39±.05 | 0.31±.03 |
| CR | 0.40±.04 | 0.33±.04 |
| CSM | 0.35±.03 | 0.27±.02 |

**Table 4.**

| Static and Dynamic Friction Coefficients of Fluorinated Thermoplastic Elastomers | | |
|---|---|---|
| TPE | Static Friction Coefficient | Dynamic Friction Coefficient |
| Kraton®G7722 | 0.21 ± .03 | 0.17 ± .02 |
| Kraton®G7720 | 0.24 ± .03 | 0.17 ± .02 |
| TPR®9101-75W900 | 0.17 ± .01 | 0.14 ± .01 |
| Santoprene® 101-73 | 0.14 ± .02 | 0.10 ± .01 |
| Geolast®701-70 | 0.21 ± .03 | 0.17 ± .02 |
| Alcryn®2070 BK | 0.15 ± .02 | 0.12 ± .01 |
| Hytrel®4056 | 0.19 ± .02 | 0.15 ± .01 |
| Hytrel®5556 | 0.16 ± .03 | 0.13 ± .01 |
| Hytrel®6359 | 0.12 ± .02 | 0.09 ± .01 |
| Hytrel®7246 | 0.11 ± .02 | 0.07 ± .01 |
| Hytrel®8238 | 0.11 ± .01 | 0.06 ± .01 |
| Zytel®FN714 | 0.14 ± .02 | 0.13 ± .02 |
| Pellethane®2102-90A | 0.33 ± .03 | 0.23 ± .02 |

Static and dynamic friction coefficients for the starting materials are presented in Tables 1 and 2. Comparison of these values with the results presented in Tables 3 and 4 shows that, in most cases, the fluorinated elastomers exhibit significantly reduced friction coefficients relative to their non-fluorinated counterparts.

With regard to the thermoset elastomers, with the exception of the FKM systems, articles exposed to fluorine typically exhibited static and dynamic friction coefficients that were between 10 to 25% of the values for the non-fluorinated counterpart. That FKM systems did not exhibit such a dramatic friction reduction may be explained, at least in part, by the fact that these systems were compounded from partially fluorinated base polymers and therefore contained fewer "replaceable" hydrogen atoms in the polymer backbone. The fluorinated "NBR-IL" system exhibited an approximately 3 fold decrease in friction coefficients compared to the parent compound. This indicates that the method of this invention is capable of generating a superior reduction in friction than may be obtained by use of internal lubricants.

With regard to thermoplastic elastomers, fluorinated styrenic, olefinic, TPV and MPR systems all exhibited static and dynamic friction coefficients that were typically between 5-20% of the values of their non-fluorinated counterparts. This represents a drastic reduction in friction in these systems. For the remaining TPEs studied, the observed friction reductions were less dramatic. For the fluorinated copolyester and polyurethane systems, the static and dynamic friction coefficients were typically 60-90% of the values for their non-fluorinated counterparts. However, since the parent systems initially have low coefficients of friction, these reductions are still significant. Of the polyamide TPEs studied, only Zytel FN714 showed a reduction in its friction coefficient after exposure to fluorine. The remaining polyamide TPEs studied exhibited an increase in friction coefficients after fluorine exposure.

### B. Taber Abrasion

Taber Abrasion data was determined according to ASTM D3389 using either the "weight loss" or "wear factor" methods. These results are summarized in Tables 5 through 7, respectively.

**Table 5.**

| Taber Abrasion Data for Fluorinated and Non-fluorinated Elastomers¹ | | | |
|---|---|---|---|
| THERMOSET | CYCLES TO WEAR-THROUGH² | | WEAR FACTOR³ |
| | FLUORINATED | NON-FLUORINATED | |
| EP | 700 | 300 | 0.43 |
| NBR | 200 | 150 | 0.75 |
| NBR-IL | 225 | 175 | 0.78 |
| XNBR | 250 | 125 | 0.50 |
| HSNBR | 600 | 300 | 0.50 |
| FKM-1 | 500 | 300 | 0.60 |
| FKM-2 | 600 | 400 | 0.67 |
| TFEP | 185 | 90 | 0.49 |
| IIR | 100 | 70 | 0.70 |
| ACM | 125 | 40 | 0.32 |
| CR | 240 | 150 | 0.62 |
| CSM | 40 | 30 | 0.75 |

**Table 6.**

| Taber Abrasion Data for Fluorinated and Non-Fluorinated Thermoplastic Elastomers¹ | | | |
|---|---|---|---|
| TPE | Cycles to Wear-through² | | Wear Factor³ |
| | Fluorinated | Non-Fluorinated | |
| Santoprene®101-73² | 46 | 18 | 0.39 |
| Geolast®701-70 | 76 | 50 | 0.66 |

| | | | |
|---|---|---|---|
| ¹ H-18 wheels at 1 kg. loading | | | |
| ² Mean of 3 separate runs taken. | | | |
| ³ Wear factor is defined as:$\text{Wear Factor =} \frac{\text{cycles to wear-through for non-fluorinated elastomers}}{\text{cycles to wear-through for fluorinated elastomers}}$ | | | |

In all cases, the fluorinated article had superior Taber Abrasion characteristics.

TPEs Santoprene®101-73 and Geolast®701-70 closely resemble conventional rubber in their performance properties, and were amenable to the "wear factor" method of analysis. Other TPEs more closely resembled conventional thermoplastics and therefore were evaluated by the "weight loss" method. Fluorinated Santoprene 101-73 showed a performance advantage over the non-fluorinated material by both Taber Abrasion methods

**Table 7.**

| Taber Abrasion Data for Fluorinated and Non-Fluorinated TPEs Using the Weight Loss Method | | |
|---|---|---|
| | Weight Loss (mg)¹ | |
| TPE | Fluorinated | Non-Fluorinated |
| Santoprene®101-73² | 65 | 75 |
| Hytrel®4056³ | 114 | 117 |
| Hytrel®5556³ | 92 | 107 |
| Hytrel®6359³ | 73 | 102 |
| Hytrel®7246³ | 71 | 99 |
| Hytrel®8238³ | 71 | 89 |
| Pellethane®2102-90A³ | 30 | 36 |

| | | |
|---|---|---|
| ¹Mean of 3 separate runs. | | |
| ²H-18 wheels, 1000 g. load, 300 cycles. | | |
| ³H-18 wheels, 1000 g. load, 1000 cycles. | | |

### C. Tensile Testing

All tensile testing was performed in accordance with ASTM D412 or with ASTM D1708 using an Instron Model 4204 Tensile Tester. Test results are presented in Tables 8 and 9.

**Table 8.**

| Tensile Properties of Fluorinated Thermoset Elastomers | | | | |
|---|---|---|---|---|
| ELASTOMER | TENSILE STRENGTHkp/mm² (psi) | ELONGATION (%) | 100% MODULUS kp/mm² (psi) | HARDNESS¹ (SHORE A) |
| EP | 1,24 (1760) | 165 | 0,64 (910) | 80 |
| NBR | 1,47 (2100) | 350 | 0,39 (550) | 70 |
| NBR-IL | 0,99 (1410) | 135 | 0,69 (980) | 76 |
| XNBR | 1,75 (2500) | 190 | 0,74 (1050) | 80 |
| HSNBR | 1,89 (2820) | 400 | 0,21 (300) | 65 |
| FKM-1 | 1,47 (2100) | 150 | 0,97 (1375) | 75 |
| FKM-2 | 1,85 (2700) | 240 | 0,72 (1020) | 80 |
| TFEP | 1,19 (1700) | 250 | 0,35 (500) | 70 |
| IIR | 1,45 (2060) | 330 | 0,28 (400) | 70 |
| ACM | 1,32 (1875) | 330 | 0,45 (630) | 70 |
| CR | 1,42 (2020) | 150 | 0,93 (1320) | 80 |
| CSM | 1,79 (2550) | 290 | 0,63 (900) | 70 |

| | | | | |
|---|---|---|---|---|
| ¹ Determined according to ASTM D1415. | | | | |

**Table 9.**

| Tensile Properties of Fluorinated TPEs | | | | |
|---|---|---|---|---|
| TPE | Tensile Strength kp/mm² (psi) | Elongation (%) | 100% Modulus kp/mm² (psi) | Hardness (Shore) |
| Kraton®G7722¹ | 0,73 (1030) | 520 | 0,22 (315) | 66-67 A |
| Kraton®G7720 | 0,44 (620) | 665 | 0,15 (215) | 65 A |
| TPR®9101-75W900¹ | 0,53 (750) | 450 | 0,38 (540) | 79 A |
| Santoprene®101-73¹ | 0,70 (990) | 400 | 0,34 (485) | 76 A |
| Geolast®701-70¹ | 0,55 (775) | 225 | 0,35 (500) | 77 A |
| Alcryn®2070 BK¹ | 0,75 (1070) | 240 | 0,52 (740) | 73 A |
| Hytrel®4056² | 3,05 (4350) | 810 | 5,77 (8 240) | 43 D |
| Hytrel®5556² | 3,57 (5100) | 600 | 16,17 (23 100) | 54 D |
| Hytrel®6359² | 3,71 (5290) | 510 | 29,26 (41 800) | 61 D |
| Hytrel®7246² | 3,99 (5700) | 420 | 50,82 (72 600) | 70 D |
| Hytrel®8238² | 3,94 (5620) | 275 | 91,70 (131 000) | 75 D |
| Pellethane®2101-90A² | 5,39 (7700) | 615 | 5,43 (7 750) | 93 A |
| Zytel®FN714² | 1,75 (2500) | 170 | 35,000 (50 000) | 57 D |

| | | | | |
|---|---|---|---|---|
| ¹ASTM D412 | | | | |
| ²ASTM D1708 | | | | |

Tensile strengths of the fluorinated elastomers were generally found to be within ±10% of the values for the corresponding non-fluorinated elastomers shown in Tables 1 and 2, respectively. Elongation values for the fluorinated thermoset elastomers were typically 3-5% lower than the corresponding values for the parent systems. Elongation values for the TPEs were generally within ±10% of the corresponding non-fluorinated TPE. 100% Modulus and hardness values remained fairly constant for all systems before and after exposure to fluorine.

Stress/strain curves were plotted before and after exposure to fluorine. In all elastomers studied, no significant differences were found between the stress/strain behavior of fluorinated and non-fluorinated systems. This indicates that, essentially, the mechanical behavior of a fluorinated elastomer prepared by the methods of this invention will be the same as that of the non-fluorinated precursor. The stress/strain plot of a representative elastomer before exposure to fluorine is presented in Figure 1. The stress/strain plot of this elastomer after exposure to fluorine is presented in Figure 2.

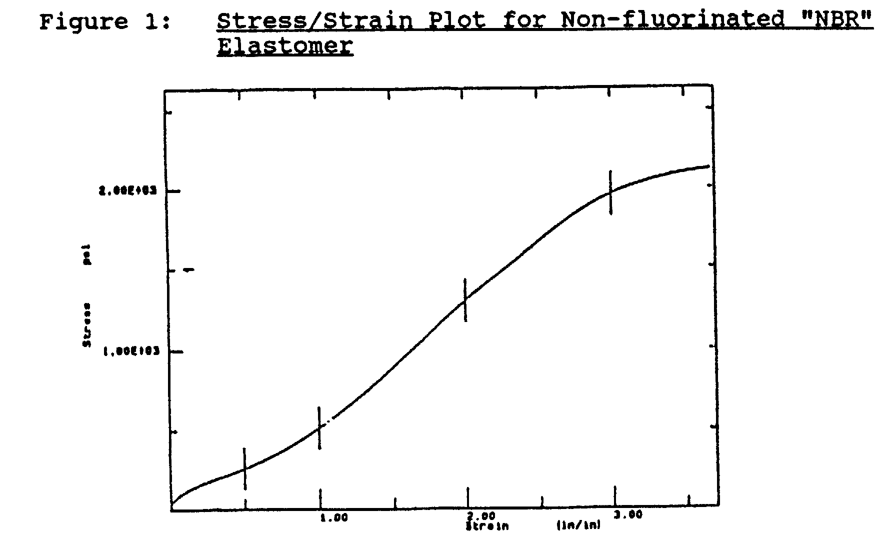

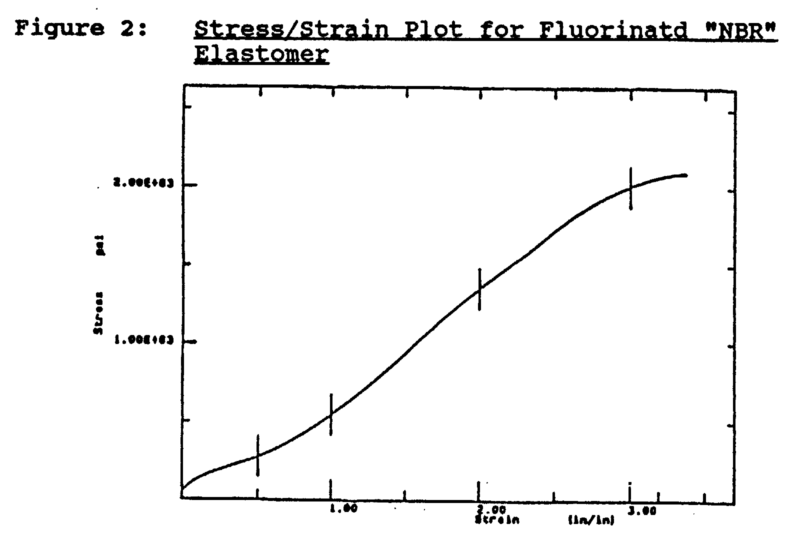

### D. Infrared Analysis

Infrared analyses of all elastomers before and after exposure to fluorine were made with a Nicolet Model 5PC FTIR Spectrometer, using the ATR technique described previously. The infrared spectra of all elastomers after exposure to fluorine by the methods of this invention were characterized by a broad, relatively intense absorption centered around 1100 wavenumbers. This absorption frequency is characteristic of the carbon-fluorine bond; its presence indicates the fluorination of the base polymer in each elastomer. With the exception of this absorption, most IR spectra of fluorinated elastomers were relatively featureless.

The appearance of an absorption frequency at 1100 wavenumbers occurred with the concomitant loss of a strong absorption frequency at around 3000 wavenumbers, observed in the IR spectra of all elastomers studied prior to fluorine exposure. It is well documented that carbon-hydrogen bonds absorb IR radiation at around 3000 wavenumbers. Consequently, the FTIR spectra indicates that exposure of hydrocarbon-based elastomers to fluorine results in the replacement of hydrogen atoms on the polymer backbone by fluorine atoms.

The FTIR spectrum of a representative elastomer before exposure to fluorine is presented in Figure 3. The FTIR spectrum of this elastomer after exposure to fluorine is presented in Figure 4.

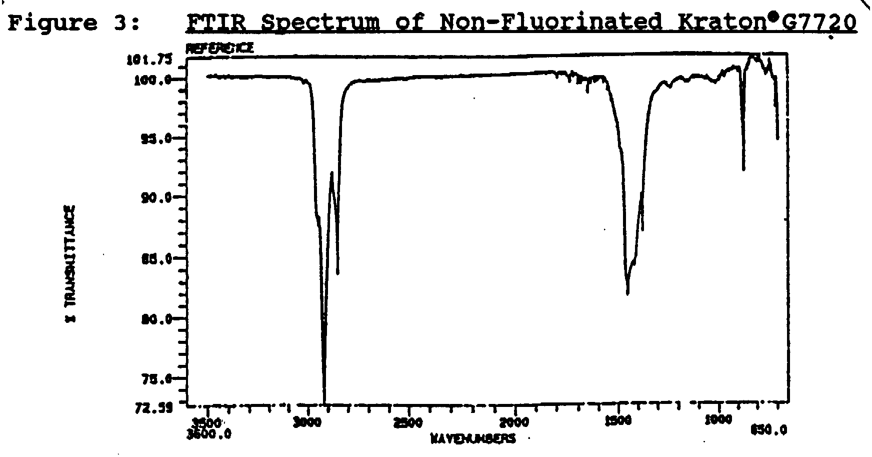

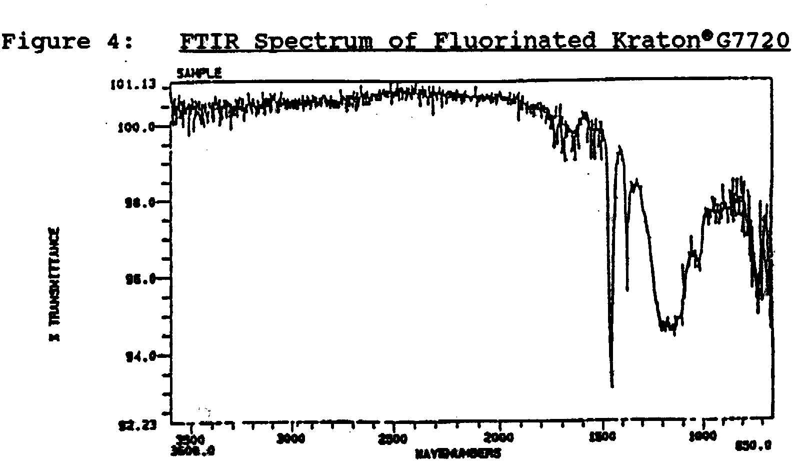

### E) Miscellaneous Wear Testing

The method of this invention is illustrated by the following examples:

### Example 1

To a brass reactor vessel, internal volume 0.75 liters, was charged anhydrous sodium fluoride powder (30.0 g) and a teflon-coated magnetic stir bar (50,8 mm = 2" length). Three elastomeric radial lip seals (total weight 22.955 g, approximate O.D. 38,1 mm (1.5"), Part No. CR9843), containing an acrylonitrile-butadiene base polymer were charged into the reactor vessel. These seals were stirred in the sodium fluoride at 30 rpm. After sealing the vessel and purging for 30 minutes with UPC grade nitrogen at 150 scc/min., the fluorine flow was set at 25 scc/min. and the nitrogen flow set at 35 scc/min. These flowrates were maintained for 90 minutes at room temperature, after which time the fluorine flow was stopped. The reactor was then repurged with UPC nitrogen for 30 minutes at 150 scc/min. The fluorinated seals were removed from the reactor and washed with warm water. After drying at 75°C for ten minutes, the seals weighed 23.023 grams.

A seal torque test, which measures the inherent torque of the seal as it operates against a metal rod, was performed for both fluorinated and non-fluorinated lip seals. The results of these tests, presented in Figure 5, indicated significant reduction in torque for the fluorinated seal over the standard seal. This torque reduction is directly attributable to the reduction in static and dynamic friction coefficients in the fluorinated seal.

### Example 2

To a brass reactor vessel, internal volume 0.75 liters, was charged anhydrous sodium fluoride (25.0 g) and a teflon-coated magnetic stir bar 50,8 mm (2" length). Twenty (20) 2-214 sized O-rings, fabricated from "EP" elastomer (total weight 21.152 g), were charged into the reactor vessel. The O-rings were stirred in sodium fluoride at about 30 rpm. After sealing and purging the reactor vessel as before, the fluorine flow was set at 25 scc/min. and the nitrogen flow was set at 35 scc/min. These flowrates were maintained for 60 minutes at room temperature, after which time the fluorine flow was stopped. The reactor was then purged with nitrogen as before. The seals were removed and washed with warm water. After drying for ten minutes at 75°C, the seals weighed 21.207 grams.

Fluorinated and non-fluorinated "EP" 2-214 O-rings were life-cycled in Skydrol 500B-4 hydraulic fluid at 225°C as required by National Aerospace Specification (NAS) 1613. This specification requires that O-rings be mounted in a gland and subjected to a 4" axial stroke from a chrome-plated rod at a rate of 30 cycles/min. with a pressure fluctuation of 0-2,1 kp/mm²/stroke (0-3,000 psi/stroke). The primary purpose of this experiment was to determine if the demonstrated friction reduction in the fluorinated "EP" O-rings equates to an increase in wear life in the life cycle test.

The number of cycles each seal completed before failure was as follows:

| Standard "EP" Elastomer | Fluorinated "EP" Elastomer |
|---|---|
| 137,600 cycles | 181,600 cycles |

As demonstrated by the test data, the method of the present invention resulted in extended wear life in these systems.

### Example 3

The reactor vessel was charged with sodium fluoride (15.0 g), a teflon-coated stir bar and 50 pieces of an elastomeric O-ring, size 2-013, to be used as a pneumatic spool seal. The O-rings were of an acrylonitrile-butadiene formulation and weighed 5.910 grams. After thoroughly purging the reactor as usual, fluorine and nitrogen flowrates were set at 25 and 35 scc/min., respectively. After maintaining these flowrates for 90 minutes, the fluorine flow was stopped and the reactor vessel purged with nitrogen. After washing and drying as usual, the product weighed 5.942 grams.

The performance of fluorinated and non-fluorinated spool seals were evaluated measuring the minimum shift pressure as the seal was cycle tested. These tests were performed in a pneumatic application, i.e. no fluid was present. The results are shown in Table 10.

**Table 10.**

| Minimum Shift Pressure of Fluorinated and Non-fluorinated Spool Seals | | | |
|---|---|---|---|
| No. of Cycles (x 10⁶) | Minimum Shift Pressure (psi) | | % Advantage of Fluorinated Elastomer |
| | Standard Elastomer | Fluorinated Elastomer | |
| 0 | 20.00 | 22.00 | -10.0 |
| 2 | 28.75 | 25.60 | +12.3 |
| 4 | 38.75 | 29.06 | +33.3 |
| 6 | 45.63 | 30.63 | +48.0 |
| 8 | 46.56 | 31.88 | +46.1 |
| 10 | 50.00 | 33.13 | +50.9 |
| 15 | 50.00 | 35.00 | +42.9 |
| 20 | 50.00 | 37.50 | +33.3 |

It can be seen that the fluorinated elastomer exhibited a significantly reduced running friction compared to the non-fluorinated elastomer.

### F. Fluid Permeability Resistance

The ability of certain thermoplastic elastomers to withstand swelling when immersed in polar solvents, such as phosphate ester-based test fluids, was evaluated according to ASTM D471. In all cases, the specimens were ASTM "Microtensile" dumbbells of material. All immersion tests were performed at 100°C and were of 22 hours duration.

Copolyester-type TPEs were found to exhibit a significantly increased resistance to swell after exposure to fluorine. Additionally, it was found that there was a marked correlation between resistance to swell and time of exposure to fluorine, i.e. permeability resistance in these systems increased with exposure to fluorine. These results are summarized in Table 11.

**Table 11.**

| Volume Swell vs. Exposure Time to Fluorine for Copolyester TPEs (Skydrol,500 B-4, 100°C, 22 hours immersion) | | | | |
|---|---|---|---|---|
| | % Swell | | | |
| TPE | 0 | 8 | 16 | 80¹ |
| Hytrel®4056 | 170 | 147 | 125 | 110 |
| Hytrel®5556 | 26 | 21 | 18 | 2 |
| Hytrel®6359 | 18 | 11 | 6 | 1 |
| Hytrel®7246 | 7 | 2 | 0 | -1 |
| Hytrel®8238 | 3 | 0 | 0 | -1 |

| | | | | |
|---|---|---|---|---|
| ¹Exposure time to fluorine in hours | | | | |

Other TPEs studied exhibited less dramatic permeability resistances after exposure to fluorine by the methods of this invention. The results of these experiments are presented in Table 12.

**Table 12.**

| Volume Swell vs. Exposure Time to Fluorine for TPR, 9101-75W900 and Alcryn, 2070 BK (Skydrol,500 B-4, 100°C, 22 Hrs. | | | |
|---|---|---|---|
| | % Swell | | |
| TPE | 0 | 16 | 80 |
| TPR,9101-75W900 | -12 | -11 | 0 |
| Alcryn,2070 BK | 195 | 190 | 1 |
| ¹Exposure to time to fluorine in hours | | | |

TPR 9101-75W900 exhibited a zero volume swell in Skydrol 500B-4 after prolonged exposure to fluorine. This indicates that the barrier properties of this material are improved in two ways, i.e., fluids are prevented both from entering and leaving the body of the article after exposure to fluorine.

## Claims

1. A method of preparing fluorinated elastomeric articles, comprising the steps of:
providing one or more elastomeric articles of the type having a backbone chain substantially composed of carbon atoms having hydrogen atoms attached thereto by replaceable aliphatic carbon-hydrogen bonds;
placing the elastomeric articles and a hydrogen fluoride scavenger in a reactor vessel;
fluorinating the elastomeric articles by introducing a flow of fluorine gas into the reactor vessel; and
agitating the elastomeric articles and the hydrogen fluoride scavenger during the fluorination.

2. The method of claim 1, including the steps of flushing the reactor vessel with an inert gas prior to fluorinating the elastomeric article, and fluorinating the article with a gaseous mixture of fluorine and the inert gas.

3. The method of claim 2, including the further step of purging the vessel of excess fluorine gas after fluorination by flushing the reactor vessel with an inert gas.

4. The method of one of the preceding claims, wherein the hydrogen fluoride scavenger is sodium fluoride or potassium fluoride.

5. The method of one of the preceding claims, wherein the weight of the hydrogen fluoride scavenger added to the vessel is substantially the same as the weight of the articles to be fluorinated.

6. The method of one of claims 2-5, wherein the concentration of fluorine in the gaseous mixture is between 2% and 95%, preferably between 5% and 75%.

7. The method of one of the preceding claims, wherein the elastomeric articles are thermoset elastomers, and the articles have a formulation comprising at least one of fillers, plasticizers and curing additives.

8. The method of claim 7, wherein the articles are blended with a filler comprising at least one of carbon black, graphite, carbon powders, silicone, calcium carbonate, glass powder, talc and clay and carbon fibers, and wherein the base polymer and filler together comprise between 75-90 wt. % of the elastomer formulation.

9. The method of one of claims 1-8, wherein the elastomeric articles are thermoset elastomers, and wherein the fluorination of the thermoset elastomeric articles proceeds for 60-240 minutes at a fluorine flow rate of 5-50 scc/min. and a nitrogen flow rate of 15-50 scc/min.

10. The method of one of claims 1-6, wherein the elastomeric articles are thermoplastic elastomers, and the articles have a formulation comprising a base polymer and a filler, the filler comprising at least one of carbon black, graphite, carbon powder, carbon fibers, PTFEs, fluorocarbons and molybdenum disulfide, and wherein the base polymer and filler comprise at least 95% by weight of the formulation of the elastomeric article.

11. The method of one of claims 1-6 and 10, wherein the elastomeric articles are thermoplastic elastomers, and wherein the fluorination of the thermoplastic elastomeric articles proceeds for 60-4800 minutes at a fluorine flow rate of 5-50 scc/min. and a nitrogen flow rate of 15-50 scc/min.

12. The method of one of the preceding claims wherein the elastomeric articles are washed and then dried following the fluorination reaction.

13. The method of one of claims 1-6, wherein said elastomeric article comprises at least one member selected from the group consisting of copolyester thermoplastic elastomers, olefinic thermoplastic elastomers/thermoplastic polyolefins, styrenic thermoplastic elastomers, elastomeric alloy thermoplastic elastomers, polyurethane thermoplastic elastomers, and polyamide thermoplastic elastomers.

14. A fluorinated elastomer prepared by the method of one of the preceding claims.

## Patentansprüche

1. Verfahren zur Herstellung fluorierter Elastomerartikel, umfassend die Schritte:
Schaffen eines oder mehrerer Elastomerartikel des Typs, welcher eine Hauptkette umfaßt, die im wesentlichen zusammengesetzt ist aus Kohlenstoffatomen, an denen mittels austauschbarer aliphatischer Kohlenstoff-Wasserstoff-Bindungen Wasserstoffatome befestigt sind;
Unterbringen des Elastomerartikels und eines Fluorwasserstoffreinigungsmittels in einem Reaktorgefäß;
Fluorierung des Elastomerartikels durch Einführen eines Fluorgasstroms in das Reaktorgefäß; und
Aufrühren des Elastomerartikels und des Fluorwasserstoffreinigungsmittels während der Fluorierung.

2. Verfahren nach Anspruch 1, umfassend die Schritte des Spülens des Reaktorgefäßes mit einem Edelgas vor dem Fluorieren des Elastomerartikels und des Fluorierens des Artikels mit einer gasförmigen Mischung aus Fluor und dem Edelgas.

3. Verfahren nach Anspruch 2, umfassend den weiteren Schritt der Reinigung des Gefäßes von überschüssigem Fluorgas nach der Fluorierung mittels Spülens des Reaktorgefäßes mit einem Edelgas.

4. Verfahren nach einem der vorangehenden Ansprüche, wobei das Fluorwasserstoffreinigungsmittel Natriumfluorid oder Kaliumfluorid ist.

5. Verfahren nach einem der vorangehenden Ansprüche, wobei das Gewicht des dem Gefäß zugegebenen Fluorwasserstoffreinigungsmittels im wesentlichen dem Gewicht der zu fluorierenden Artikel entspricht.

6. Verfahren nach einem der Ansprüche 2 - 5, wobei die Konzentration des Fluors in der gasförmigen Mischung zwischen 2% und 95% beträgt, vorzugsweise zwischen 5% und 75%.

7. Verfahren nach einem der vorangehenden Ansprüche, wobei die elastomeren Artikel gehärtete Elastomere sind und die Zusammensetzung der Artikel zumindest einen Zusatzstoff aus der Gruppe Füllstoff, Weichmacher und Härtemittel aufweist.

8. Verfahren nach Anspruch 7, wobei die Artikel mit einem Füllstoff gemischt werden, der zumindest einen Bestandteil der Gruppe Carbon-Black, Graphit, Kohlenstoffpulver, Silikon, Calciumcarbonat, Glaspulver, Talk und Ton und Kohlenstofffasern enthält, und wobei das Basispolymer und der Füllstoff gemeinsam 75 - 90 Gew.% der Elastomerzusammensetzung bilden.

9. Verfahren nach einem der Ansprüche 1 - 8, wobei die Elastomerartikel gehärtete Elastomere sind und wobei die Fluorierung der gehärteten Elastomerartikel bei einer Fluorfließgeschwindigkeit von 5 - 50 scc/min und einer Stickstofffließgeschwindigkeit von 15 - 50 scc/min 60 - 240 Minuten dauert.

10. Verfahren nach einem der Ansprüche 1 - 6, wobei die Elastomerartikel gehärtete Elastomere sind und die Artikel eine Zusammensetzung aufweisen, welche ein Basispolymer und einen Füllstoff umfaßt, wobei der Füllstoff zumindest einen Bestandteil aus der Gruppe Carbon-Black, Graphit, Kohlenstoffpulver, Kohlenstofffasern, PTFE, Fluorkohlenwasserstoff und Molybdändisulfid umfaßt, und wobei das Basispolymer und der Füllstoff zumindest 95 Gew.% der Zusammensetzung des Elastomerartikels bilden.

11. Verfahren nach einem der Ansprüche 1 - 6 und 10, wobei die Elastomerartikel gehärtete Elastomere sind und wobei die Fluorierung des gehärteten Elastomerartikels bei einer Fluorfließgeschwindigkeit von 5 - 50 scc/min und einer Stickstofffließgeschwindigkeit von 15 - 50 scc/min 60 - 4800 Minuten dauert.

12. Verfahren nach einem der vorangehenden Ansprüche, wobei die Elastomerartikel im Anschluß an die Fluorierungsreaktion gewaschen und dann getrocknet werden.

13. Verfahren nach einem der Ansprüche 1 - 6, wobei der Elastomerartikel zumindest ein Element aus der Gruppe bestehend aus gehärteten Copolyester-Elastomeren, gehärteten Olefin-Elastomeren/gehärteten Polyolefinen, gehärteten Styrenelastomeren, gehärteten Elastomerverbundmaterialelastomeren, gehärteten Polyurethanelastomeren und gehärteten Polyamidelastomeren umfaßt.

14. Fluoriertes Elastomer, das nach dem Verfahren eines der vorangehenden Ansprüche hergestellt wurde.

## Revendications

1. Procédé pour la préparation d'élastomères fluorés, caractérisé en ce qu'il comporte les étapes de :
apport d'un ou plusieurs élastomères du type possédant une chaîne d'ossature constituée essentiellement d'atomes de carbone auxquels des atomes d'hydrogène sont liés par des liaisons carbone-hydrogène aliphatiques remplaçables ;
mise en place des élastomères et d'un fluorure éliminateur d'hydrogène dans une cuve de réacteur ;
fluoration des élastomères par l'introduction d'un flux de gaz de fluor dans la cuve de réacteur ; et
agitation des élastomères et du fluorure éliminateur d'hydrogène pendant la fluoration.

2. Procédé selon la revendication 1, caractérisé en ce qu'il comprend les étapes de rinçage de la cuve de réacteur avec un gaz inerte avant la fluoration de l'élastomère et de fluoration de l'élastomère avec un mélange gazeux composé de fluor et du gaz inerte.

3. Procédé selon la revendication 2, caractérisé en ce qu'il comprend également une étape d'évacuation du gaz de fluor excédentaire hors de la cuve après la fluoration par rinçage de la cuve de réacteur avec un gaz inerte.

4. Procédé selon l'une quelconque des revendications précédentes, caractérisé en ce que le fluorure éliminateur d'hydrogène est du fluorure de sodium ou du fluorure de potassium.

5. Procédé selon l'une quelconque des revendications précédentes, caractérisé en ce que le poids du fluorure éliminateur d'hydrogène ajouté dans la cuve est sensiblement égal à celui des élastomères à fluorer.

6. Procédé selon l'une quelconque des revendications 2 à 5, caractérisé en ce que la concentration du fluor dans le mélange gazeux se situe entre 2 % et 95 %, de préférence entre 5 % et environ 75 %.

7. Procédé selon l'une quelconque des revendications précédentes, caractérisé en ce que les articles en élastomère sont des élastomères thermodurcis, et la formule des articles comprend au moins des charges, des plastifiants et des additifs de polymérisation.

8. Procédé selon la revendication 7, caractérisé en ce que les articles sont mélangés à une charge comprenant au moins du noir de carbone, du graphite, des poudres de carbone, du silicone, du carbonate de calcium, de la poudre de verre, du talc et de l'argile et des fibres de carbone, et en ce que le polymère de base et la charge représentent à eux deux entre 75 et 90 % du poids dans la formule de l'élastomère.

9. Procédé selon l'une quelconque des revendications 1 à 8, caractérisé en ce que les articles en élastomère sont des élastomères thermodurcis, et en ce que la fluoration des articles en élastomère thermodurci dure de 60 à 240 minutes pour un débit de fluor de 5 à 50 cm³/min. et un débit d'azote de 15 à 50 cm³/min.

10. Procédé selon l'une quelconque des revendications 1 à 6, caractérisé en ce que les articles en élastomère sont des élastomères thermoplastiques, et en ce que la formule des élastomères comprend un polymère de base et une charge, la charge comprenant au moins du noir de carbone, du graphite, de la poudre de carbone, des fibres de carbone, du PTFE, des hydrocarbures fluorés et du bisulfure de molybdène, et en ce que le polymère de base et la charge représentent au moins 95 % du poids dans la formule de l'élastomère.

11. Procédé selon l'une quelconque des revendications 1 à 6 et 10, caractérisé en ce que les articles en élastomère sont des élastomères thermoplastiques, et en ce que la fluoration des élastomères thermoplastiques dure de 60 à 4800 minutes à un débit de fluor de 5 à 50 cm³/min. et un débit d'azote de 15 à 50 cm³/min.

12. Procédé selon l'une quelconque des revendications précédentes, caractérisé en ce que les élastomères sont lavés puis séchés après la réaction de fluoration.

13. Procédé selon l'une quelconque des revendications de 1 à 6, caractérisé en ce que ledit élastomère comprend au moins un membre du groupe composé d'élastomères thermoplastiques à base de copolyester, d'élastomères thermoplastiques à base d'oléfines ou de polyoléfines thermoplastiques, d'élastomères thermoplastiques à base de styrène, d'élastomères thermoplastiques faits d'un alliage d'élastomères, d'élastomères thermoplastiques à base de polyuréthane et d'élastomères thermoplastiques à base de polyamide.

14. Elastomère fluoré préparé avec le procédé selon l'une quelconque des revendications précédentes.
